Europäisches Patentamt
European Patent Office
Office européen des brevets

(19)

(11) Publication number: **0 007 810**
**A2**

(12) # EUROPEAN PATENT APPLICATION

(21) Application number: 79301505.8

(22) Date of filing: 30.07.79

(51) Int. Cl.³: C 08 F 279/04
C 08 F 2/22, C 08 F 4/40

(30) Priority: 31.07.78 US 929867

(43) Date of publication of application: 06.02.80 Bulletin 80/3

(84) Designated Contracting States: BE DE FR GB NL

(71) Applicant: MONSANTO COMPANY
Patent Department 800 North Lindbergh Boulevard
St. Louis Missouri 63166(US)

(72) Inventor: Padwa, Allen Robert
222 Falley Drive
Westfield, Massachusetts 01085(US)

(72) Inventor: Bothwell, Jr., William
Old Gilbertville Road
Ware, Massachusetts 01082(US)

(74) Representative: Pearson, John Lionel et al,
Monsanto House 10-18 Victoria Street
London, SW1H ONQ(GB)

(54) **A process for emulsion grafting diene rubber particles.**

(57) This invention relates to an improved process for preparing stable latices of relatively large rubber particles comprising the steps of (A) agglomerating a diene rubber latex having a particle size of less than about 0.20 microns to rubber particles having a rubber particle size of about 0.3 to 1.0 microns, (B) stabilizing said rubber particles with an emulsifying agent forming a stable agglomerated rubber latex and (C) grafting said agglomerated rubber particles to form a latex of grafted rubber particles, the improvement comprising: carrying out step (A) at a temperature of about 1 to 25°C. and step (C) under grafting conditions such that said monomer composition is activated with a redox catalyst system operating at temperatures of 35 to 50°C. providing a stable latex of grafted agglomerated rubber particles essentially free of coagulum.

EP 0 007 810 A2

# A PROCESS FOR EMULSION GRAFTING DIENE RUBBER PARTICLES

## BACKGROUND OF THE INVENTION

U.S.P. 4,043,955 discloses a suitable method for continuously agglomerating rubber particles contained in a latex having a weight average diameter of about 0.01 to 0.20 microns and can be agglomerated to sizes of about 0.3 to 1.0 microns using a water soluble organic acid anhydride agglomerating system followed by stabilizing the relatively large rubber particles in the latex with an acid-stable emulsifying compound.

Such latices of relatively large agglomerated rubber particles have less surface area, hence, are difficult to stabilize sufficiently to be subsequently grafted with monomers without some level of coagulation during grafting. Even small amounts of coagulum, e.g. 0.1 to 5%, create filtration and loss problems.

U.S.P. 4,043,955 discloses a continuous agglomeration system which provides a low-shear zone for flotation and removal of coagulum. The agglomeration system operates at about 30 to 50°C. to provide reasonable rates of agglomeration. It has now been found that continuous agglomeration can produce more stable latices of large rubber particles if carried out at temperatures of about 1 to 25°C. providing syneresis and a low temperature history for the particles for subsequent low temperature grafting by a particular redox catalyst system.

U.S.P. 3,663,656 discloses a method of grafting small rubber particles and large rubber particles to form a bimodal rubber particle size distribution of grafted rubber particles.

The disclosure recognizes the problem of grafting relative large rubber particles and maintaining latex stability. The instability problem is overcome by first grafting the small rubber particles with a large surface area forming a stable latex to which the large rubber particles are added followed by grafting of the large rubber particles to form a stable latex of small and large rubber particles.

The present invention relates to a process of grafting rubber particles, namely, 0.3 to 1.0 microns either as a monodisperse rubber particle system or a bimodal rubber particle size distribution of large rubber particles, e.g. 60% by weight of 0.35 microns and 40% by weight of 0.60 micron rubber particles in one step.

The improved process produces a stable latex of relatively large grafted agglomerated rubber particles by a combination of low temperature agglomeration and low temperature redox grafting. Such stable latices of relatively large agglomerated rubber particles have great utility.

The grafted rubber particles can be recovered by dewatering the latex and drying the particles as a crumb for mixing with monovinylidene aromatic/ethylenically unsaturated nitrile polymers to form rubber reinforced ABS polyblends. If grafted with an excess of said monomers, a polymer of said monomers is formed as a matrix phase providing an ABS polyblend during the emulsion grafting and polymerization step which can be dewatered and dried as an ABS polyblend. Such polyblends with relatively large rubber particles provide ABS polyblends with superior toughness.

## SUMMARY OF THE INVENTION

The present invention relates to an improved process for preparing stable latices of large grafted diene rubber particles comprising:

A. agglomerating a diene rubber latex having an average rubber particle size of from 0.01 to 0.20 microns to rubber particles having an average particle size of 0.3 to 1.0 microns by treating said rubber latex with a water soluble organic acid anhydride,

B. stabilizing said agglomerated diene rubber particles with an emulsifying agent forming a stable agglomerated diene rubber latex,

C. grafting said agglomerated rubber particles with a monomer formulation comprising, monovinylidene aromatic and ethylenically unsaturated nitrile monomers, the improvement comprising: carrying out step (A) at temperatures of 1 to 25°C. and step (C) under grafting conditions such that the monomer formulation is activated with a redox catalyst system operating at temperature of 35 to 50°C. providing a grafted agglomerated diene rubber latex essentially free of coagulated rubber particles.

## PREFERRED EMBODIMENTS

## DIENE RUBBER LATEX

The preferred latices are those of diene rubbers or mixtures of diene rubbers, i.e., any rubbery polymers (a polymer having a second order transition temperature not higher than 0° centigrade, preferably not higher than -20° centigrade, as determined by ASTM Test D-746-52T) of one or more conjugated, 1,3 dienes, e.g., butadiene, isoprene, piperylene, chloroprene, etc. Such rubbers include homopolymers of conjugated 1,3-dienes and copolymers or block copolymers with up to an equal amount by weight of one or more copolymerizable monoethylenically unsaturated monomers such as monovinylidene aromatic hydrocarbons (e.g., styrene; an aralkylstyrene, such as the o-, m- and p-methylstyrenes, 2,4-dimethylstyrene, the arethylstyrenes, p-tert-butylstyrene, etc.; an alpha-alkylstyrene, such as alphamethylstyrene, alpha-ethylstyrene, alpha-methyl-p-methylstyrene, etc.; vinyl naphthalene, etc.); arhalo monovinylidene aromatic hydrocarbons (e.g., the o-, m- and p-chlorostyrene, 2,4-dibromostyrene, 2-methyl-4-chlorostyrene, etc.) acrylonitrile; methacrylonitrile; alkyl acrylates (e.g., methyl acrylate, butyl acrylate, 2-ethylhexyl acrylate, etc.). the corresponding alkyl methacrylates, acrylamides (e.g., acrylamide, methacrylamide, N-butylacrylamide, etc.); unsaturated ketones (e.g., vinyl methyl ketone,

methyl isopropenyl ketone, etc.), alpha-olefins (e.g. ethylene, propylene, etc.); pyridines; vinyl esters (e.g., vinyl acetate, vinyl stearate, etc.); and vinyl and vinylidene halides (e.g., the vinyl and vinylidene chlorides an vinylidene chlorides and bromides, etc.); and the like.

A preferred group of rubbers are those consisting essentially of 75.0 to 100.0 percent by weight of butadiene and/or isoprene and up to 25.0 percent by weight of a monomer selected from the group consisting of monovinylidene aromatic hydrocarbons (e.g., styrene), and unsaturated nitriles (e.g., acrylonitrile) or mixtures thereof. Particularly advantageous substrates are butadiene homopolymer or interpolymers of 90.0 to 95.0% by weight butadiene and 5.0 to 10.0% by weight of acrylonitrile or styrene.

As the content of a non-rubbery monomer in a rubber copolymer approaches 50% by weight of the interpolymer, there is a tendency to form coagulum so that the preferred rubbery interpolymers will normally contain less than about 35.0% of a non-rubbery monomer, particularly when such a monomer is polar.

Although the rubber polymer may contain minor amounts of a crosslinking agent, generally less than about 2.0% by weight, excessive crosslinking of the polymer should be avoided since it renders the surface of the particles relatively hard and the particles do not adhere to each other upon collision. Subsequent to agglomeration in accordance with the present invention, the particles may be highly crosslinked if so desired with possible benefits in agglomerated particle stability, although high crosslinking may be undesirable for some processes to which the rubber may later be subjected and wherein solution or optimum dispersion of the rubber is desired.

The polymeric solids content of the latices may vary from as little as about 5.0% by weight to as much as about 60.0% by weight; the preferred latices contain about 20.0 to 40.0% solids. The more dilute latices are not so conducive to formation of optimum particle size within reasonable time periods and the more concentrated latices sometimes tend to introduce a need for more critical process control. Generally, however, the particle size of the agglomerate increases with increasing solids content in the latex.

The latex must contain an emulsifying agent which is the salt of an organic acid with an ionization constant which is lower than that of the anhydride to be used in the process, such as, for example, the conventionally employed fatty acid soaps such as sodium oleate, sodium stearate, sodium palmitate, the equivalent potassium salts, and mixtures thereof such as rubber reserve soap. Generally, such fatty acid soaps may be characterized as the alkali metal salts of the $C_{12}$-$C_{22}$ aliphatic acids although ammonium salts may be useful in some limited applications. In addition, the latex may contain other emulsifying agents such as the anionics or non-ionics so long as these other emulsifying atents are not present in such a concentration as to render the latex stable to the acid anhydride. As will be appreciated, the amount of the emulsifying agent will normally vary with the concentration of the latex and the particular polymer involved; latices containing substantial excesses of emulsifying agent over that required for stability are not desirably employed.

## The Acid Anhydride

Various organic anhydrides may be used in the present invention if they possess the requisite degree of water solubility and a relatively high ionization constant from the acid components. To be effective, the acid anhydride must be sufficiently water soluble to hydrolyze and provide acid radicals for reaction with enough emulsifying agent to reduce the stability of the latex for collision of the particles and the resultant agglomeration. The ionization constant will be dependent upon that of the particular acid of the emulsifying agent, but generally, the water-soluble acid anhydrides have significantly higher ionization constants than the conventionally employed alkali metal soaps.

Illustrative of the acid anhydrides are acetic acid anhydride, maleic acid anhydride and propionic acid anhydride. Whether the acid is saturated or dicarboxylic appears to be of no significance. In order to achieve the desired homogeneous admixture within the latex rapidly and prior to appreciable hydrolysis, it may be desirable to admix the anhydride

initially with an organic solvent therefor which is readily miscible with water. For example, methanol, ethanol and acetone may be used advantageously to dissolve maleic acid anhydride and propionic acid anhydride and even the more highly soluble acetic acid anhydride, ratios of 1-3 parts solvent per part of anhydride being satisfactory. The resultant organic solution may then be admixed with a small volume of water which is then added to the latex. Alternatively, the more soluble anhydrides are desirably dissolved in a small volume of water which is then added to and admixed with the latex so as to obtain a homogeneous admixture rapidly. Heat may also be used to facilitate instant solution of the anhydride in a carrier for addition to the latex, but premature hydrolysis of the anhydride should be avoided.

The amount of anhydride required will vary with the amount of the emulsifying agent present in the latex which is to be reacted therewith and with the desired size of the agglomerated particles to be obtained. In addition, it has been noted that the acid anhydride tends to be more effective in latices of rubber interpolymers containing polar monomers since increasing the amount of polar monomer tends to decrease the amount of anhydride required for equivalent particle size increase.

Although amounts of anhydride equal to one-tenth the stoichiometric equivalent of the emulsifying agent (a molar ratio of 1:20 since there are two acid radicals) will produce some agglomeration in most instances, the amount employed is preferably at least one-fourth the stoichiometric equivalent. For optimum operation, the acid anhydride is added in excess of the stoichiometric equivalent of the emulsifying agent, and oftentimes, several times in excess thereof. Amounts in excess of five times the stoichiometric amount provide no significant additional benefit in terms of speed and may interfere with the stability of the agglomerated latex or with the properties of the polymer by introducing excessive acidity or corrosive action.

The Agglomerating Reaction

As previously indicated, the acid anhydride must be homogeneously distributed throughout the latex to achieve proper results. However, the admixture of the anhydride and the latex must be effected prior to appreciable hydrolysis of the anhydride or under conditions of minimal agitation. If the anhydride has hydrolyzed and the latex-anhydride mixture is subjected to appreciable agitation, the polymer particles tend to coagulate rather than agglomerate under controllable conditions and the coagulum cannot be utilized.

Accordingly, the anhydride or any carrier solution thereof should be dispersed throughout the latex rapidly prior to appreciable dissociation of the anhydride. Thus, carrier solutions of the anhydride with water should not be allowed to stand for long periods or should be maintained under conditions which inhibit hydrolysis of the anhydride such as by storage under refrigeration.

The temperature at which the agglomeration reaction is carried out has been found to be critical in forming stable latices of rubber particles, from 0.3 to 1.0 microns that are sufficiently stable to be grafted without forming coagulum of the large rubber particles. Temperatures of 1 to 25°C. during agglomeration unexpectedly produce stable large rubber particles during continuous agglomeration. The large rubber particles, having this relatively low temperature history, then must be grafted at relatively low temperatures, e.g. 35 to 50°C. to maintain the stability of the grafted agglomerated particle.

The particle size of the agglomerate can be varied by selecting the conditions of the agglomerating reaction such as time, temperature, anhydride and ratio of anhydride to emulsifying agent. In addition, the particle size will tend to increase in the solids content of the latex. With the present invention, it is possible to readily obtain an increase in particle size diameters from original latex particles, in the range of 0.01-0.2 micron (weight average), to agglomerated latex particles of 0.3 to 1.0 microns. Particles as large as 0.8-1.0 microns and even larger have been obtained with some latices depending on their emulsifying system. The

weight average particle size diameter can be determined by a published procedure of Graves, M. J. et.al., "Size Analysis of Subsieve Powders Using a Centrifugal Photosedimentometer", British Chemical Engineering, 9:742-744 (1964). A Model 3000 Particle Size Analyzer from the Martin Sweets Co., 3131 West Market Street, Louisville, Kentucky was used.

Stabilization of the Agglomerated Latex

After the agglomerating reaction has proceeded to the desired extent, the agglomerated latex must be stabilized further before it is subjected to any great measure of agitation to avoid formation of coagulum. This may be effected by adding a separate, acid-stable emulsifying agent or by adding a basic alkali metal compound to react with the acid of the emulsifying agent originally present and thereby regenerate the alkali metal soap in sufficient amount to provide stability. In either instance, the agitation required to disperse the added material throughout the latex should be minimized, and the emulsifying agent or alkali metal compound is desirably added in aqueous solution to facilitate dispersion and minimize undesirable agitation. After dispersion of the stabilizer has been effected, the latex may be agitated as required for subsequent processing and other reactions such as grafting and the like.

The amount of the stabilizing emulsifying agent may vary from as little as 0.03 to 15.0 parts per 100 parts of polymer and even higher since there is no tendency for the agglomerated particles to redisperse. Generally, amounts of about 0.07-3.00 parts per 100 parts polymer and preferably 0.1-1.0 part, are utilized.

Among the added emulsifying agents which may be employed are anionic emulsifying agents such as alkali metal salts of long chain sulfonic acids and sodium dodecyl diphenyl bisulfonate and nonionic emulsifying agents such as ethoxylated octyl phenol. Normally the non-ionic agents are required to be added in larger amounts than the anionics.

If the emulsifying agent is to be regenerated, an alkali metal hydroxide or other basic compound such as a carbonate is conveniently employed. The amount added is preferably at least the stoichiometric equivalent required to react with the

anhydride added although somewhat smaller amounts may be used with some lessening in stability of the latex. Amounts of more than two times the stoichiometric equivalent may have an adverse effect upon some latices so that the preferred amounts are 0.9-1.5 times the stoichiometric equivalent of the anhydride (1.8-3.0 times the molar amount of anhydride).

One suitable apparatus for carrying out the continuous agglomeration is disclosed in U.S.P. 4,043,955 and comprises the steps:

A. feeding continuously into a mixing zone an aqueous solution of a water soluble organic acid anhydride, while simultaneously feeding continuously into said mixing zone an aqueous latex of a low heat distortion polymer, said polymer being a diene rubber polymer, the particles of said polymer being small and adherent upon collision and said latex containing an emulsifying agent, which is a salt of an organic acid with an ionization constant lower than that of the acid of the anhydride;

B. mixing continuously said solution of said water soluble organic acid anhydride with said latex in said mixing zone forming an admixture;

C. passing continuously said admixture from said mixing zone through a perforated member forming a wall section of said mixing zone into an interconnected conduit;

D. flowing continuously, said admixture under laminar flow, induced by said perforated member, through said conduit wherein said admixture has a passage-time through said conduit sufficient to hydrolyze the acid anhydride, agglomerating the particles of the polymer to a predetermined size, forming an agglomerated admixture;

E. moving continuously said agglomerated admixture from said conduit through a low-shear zone being interconnected at one end portion to said conduit and having a withdrawal port at an opposite

end portion;

F. stabilizing continuously said agglomerated admixture moving through said low-shear zone by adding an emulsifying material selected from an acid-stable emulsifying compound or a basic compound and combinations thereof, said stabilizing being prior to subjecting said agglomerated admixture to substantial shear which would cause coagulation of said agglomerated admixture; and

G. withdrawing continuously said stabilized agglomerated admixture from said low-shear zone at said opposite end by a withdrawal means providing flow-mixing in said stabilized agglomerated admixture.

The present invention is related to an improvement wherein said continuous agglomeration is carried out at temperatures of 1 to 25° C. to form a stable latex of agglomerated particles which can be graft polymerized at temperatures of 35 to 50°C. with a redox catalyst system providing a stable latex of grafted agglomerated rubber particles free of coagulum.

## Grafting Monomer Formulation

Exemplary of the monovinylidene aromatic monomers that may be homopolymerized or interpolymerized are styrene; alpha-alkyl monovinylidene monoaromatic compounds, e.g., alpha-methylstyrene, alpha-ethylstyrene, alpha-methylvinyltoluene, alpha-methyl dialkylstyrene, etc.; ring-substituted alkyl styrene, e.g., vinyl toluene, o-ethylstyrene, p-ethylstyrene, 2,4-dimethylstyrene, etc.; ring-substituted halostyrenes, e.g., o-chlorostyrene, p-chlorostyrene, o-bromostyrene, 2,4-dichlorostyrene, etc.; ring-alkyl, ring-halo-substituted styrenes, e.g. 2-chloro-4-methylstyrene, 2,6-dichloro-4-methylstyrene, etc.; vinyl naphthalene; vinyl anthracene, etc. The alkyl substituents generally have one to four carbon atoms and may include isopropyl and isobutyl groups. If so desired, mixtures of such monovinylidene aromatic monomers may be employed.

Exemplary or other vinylidene monomers that may be interpolymerized with monovinylidene aromatic monomers are ethylenically unsaturated nitriles, such as acrylonitrile, methacrylonitrile, ethacrylontrile and mixtures thereof; conjugated 1,3-dienes, e.g. butadiene, isoprene, etc.; alpha-or beta-unsaturated monobasic acids and derivatives thereof, e.g. acrylic acid, methyl acrylate, ethyl acrylate, butyl acrylate, 2-ethylhexyl acrylate, methacrylic acid and the corresponding esters thereof; acrylamide, methacrylamide; vinyl esters such as vinyl acetate, vinyl propionate, etc.; dialkyl maleates or fumarates such as dimethyl maleate, diethyl maleate, dibutyl maleate, the corresponding fumarates, etc. As is known in the art, the amount of various of the foregoing materials useful as comonomers in an interpolymer will vary.

The preferred vinylidene monomer formulations of the present invention consist at least principally of a monovinylidene aromatic hydrocarbon and an ethylenically unsaturated nitrile, i.e., such monomers comprise at least 50.0% by weight and preferably at least 75.0% by weight of the formulation. Most desirably, such monomers comprise at least 90.0% by weight of the formulation and the usual commercial compositions are substantially completely comprises of such monomers although minor amounts, i.e., less than 5.0% by weight of other components such as chain transfer agents, modifiers, etc., may be included.

These preferred polymerizable monomer mixtures contain at least 10% by weight of the monovinylidene aromatic hydrocarbon monomer and preferably at least 50% by weight thereof. They also contain at least 5% by weight of the unsaturated nitrile and preferably at least 10% by weight thereof. From the standpoint of highly advantageous commercial practice, to produce advantageous ABS products, the monomer formulations contain 20 to 95% and preferably 60 to 85% by weight of the monovinylidene aromatic hydrocarbon and 80 to 5% and preferably 40 to 15% by weight of the unsaturated nitrile.

Graft Polymerization Method

The graft copolymer is prepared by polymerizing the monomer formulation in the presence of the preformed rubber substrate. In such graft polymerization, the preformed rubbery polymer substrate generally is dispersed with the monomer in the latex and this admixture is polymerized to combine chemically or graft at least a portion of the polymer upon the rubber substrate. Depending upon the ratio of monomers to rubbery substrate and polymerization conditions, it is possible to produce both the desired degree of grafting of the polymer onto the rubbery substrate and the polymerization of ungrafted polymer to provide the desired amount of matrix polymer at the same time. Normally, the ratio of monomers to rubber charged to the graft polymerization reaction is the primary determinant of the superstrate:substrate ratio of the resultant graft copolymer. However, conditions of polymerization, rubber chemistry and particle size, rates of monomer addition, chain transfer agents, etc., also exert an effect.

The initiator or catalyst is generally included within the range of 0.1 to 3.0% by weight and preferably on the order of 0.5 to 1.5% by weight of the polymerizable monomer, depending upon the monomers and the desired polymerization cycle. The initiator may be added incrementally to facilitate optimum grafting. As is well known, it is often desirable to incorporate molecular weight regulators such as mercaptans, halides and terpenes in relatively small percentages by weight, on the order of 0.001 to 2.5% by weight of the polymerizable monomer. In addition, it may be desirable to include relatively small amounts of antioxidants or stabilizers such as the conventional alkylated phenols, although these may be added during or after polymerization.

In the present process, the stabilized latex of agglomerated rubber particles and the monomer formulation is polymerized in an inert atmosphere at temperatures in the range of 30-55° centigrade with agitation. Pressures of (7 to 700) x $10^2$ kgs per sq.m. may be employed. Although the entire amount of the monomer formulation may be present at the time that polymerization is commenced, generally it is preferable to add the monomer formulation either continuously or in increments over the major portion of the polymerization cycle with at least some of the monomer formulation being added after the agglomerated or large particle rubber latex has been introduced into the polymerizing mixture. Normally, additional initiator is added incrementally or continuously over that portion of the cycle during which the monomer formulation is being added. Polymerization is continued until substantially all, i.e., more than 90% of the monomers have been polymerized. The remaining monomer formulation or other volatile components are then distilled from the latex which is dewatered, washed and dried. The latex may be dewatered by spray drying, by coagulation through the addition of salts, etc.

The total amount of monomer formulation to be added will normally amount to 10-70 parts monomer per 100 parts total rubbery polymer and preferably about 30-50 parts per 100 parts total rubbery polymer. The actual amount of monomer formulation added will vary dependent upon the grafting efficiency of the reaction and the desired superstrate to substrate ratio for the graft copolymers formed by the different particle size rubbers.

The polymerization cycle will normally range from 3-8 hours and preferably 1-2 hours. In accordance with the preferred procedure, the monomer formulation is added over approximately 2/6-5/6 of the total polymerization cycle. Although this addition may take the form of increments of varying size, the preferred technique utilizes substantially continuous addition at a relatively constant rate over 1/2-3/4 of the cycle.

## Effect of Particle Size on Graft Ratio

Generally, the particle size of the rubbery polymer has an effect upon the optimum grafting level for the large particle graft copolymer. Accordingly, the density of grafting produced by a given weight of graft superstrate will vary depending upon the size of the rubber particle. An excessive graft level is to be avoided with respect to the large particle rubber since it will adversely affect its contribution to impact resistance. The large particle rubber is relatively lightly grafted with the polymerization conditions and

the time of addition being selected to produce a superstrate to substrate ratio of 15 - 40:100 and prepferably 2 - 35:100.

The Polymer Blend

As will be readily appreciated, the rubber content of the polymer blend produced by the graft polymerization process of the present invention may be in excess of that desired for the final product since economics generally dictate the use of high rubber levels in the graft polymerization reaction. Accordingly, the graft polymerization blend resulting from the graft polymerization reaction will normally be blended with a vinylidene polymer of similar composition to increase the amount of matrix polymer and reduce the rubber level. This resinous polymer used for dilution of the graft copolymer may be produced by an emulsion process so that the latex thereof may be combined with the latex from the graft polymerization process and the mixed latex coagulated. Alternatively, the recovered graft copolymer may be admixed with a separately formed resinous polymer produced by emulsion, suspension or mass polymerization techniques.

Generally, the final polymer blends will contain 2-50% by weight of the total of the two rubber components. Increasing the total amount of rubber graft in the composition while maintaining the ratio of the large to small particle graft components constant generally increases the Izod impact strength of the composition but rapidly increases the viscosity of the blend and decreases the tensile strength at yield and fail and the tensile modulus. Accordingly, the preferred blends contain 7 - 35% by weight of the combined graft copolymers based upon rubber and most desirably about 13-25% by weight thereof.

Catalyst System

The redox grafting system of the present invention must be sufficiently fast to produce the required radical flux at operating conditions, i.e., pH, temperature, etc. In addition, the radicals produced by the redox catalyst or initiator must be of sufficient reactivity for both monomer initiation and hydrogen abstraction from the rubber molecule for grafting. Finally, the latex must have sufficient colloidol stability for the agglomerated rubber particles to accommodate the redox system and its coupling components without coagulation.

One suitable redox system is based on an organic peroxide/bisulfite/$Fe^{+2}$ reduction-oxidation ion couple having the general reaction scheme at a pH of 3 to 6:

$$Fe^{+2} + ROOR \longrightarrow Fe^{+3} + RO^{-} + RO\cdot$$

$$H_2O + Fe^{+3} + HSO_3{-} \longrightarrow Fe^{+2} + SO_4{=} + 3H^{+}$$

Here, the (RO·) radical activates the monomers and abstracts (H·) from the rubber leaving a free radical for combining with the activated monomers as a growing polymer chain.

Another suitable system is that based on an $S_2O_8/HSO_3^{-}/Fe^{+2}$ redox system wherein at a pH of 3 to 6:

$$Fe^{+2} + SO_3OOSO_3^{=} \longrightarrow Fe^{+3} + SO_4^{=} + SO_4^{\overline{\cdot}}$$

$$H_2O + Fe^{+3} + HSO_3^{-} \longrightarrow Fe^{+2} + SO_4^{=} + 3H^{+}$$

Transitional metals can replace the iron in such redox systems, e.g. copper, cobalt and nickel can be used. The reducing agent preferred for the redox system is the bisulfite ion-$HSO_3$- operating at a pH of 3 to 6, preferably 4 to 5, consistent with the pH of the anhydride system used in aggomerations. Other acid stable reducing agents can be used, e.g. sodium formaldehyde sulfoxylate or dodecyl mercaptan.

The grafting step (C) is carried out with the disclosed redox catalyst at temperatures of 35 to 50° C. in an aqueous emulsion of said agglomerated rubber particles stabilized with an acid stable emulsifying compound present in said aqueous emulsion latex in an amount of 0.3 to 1.5 parts per 100 parts of latex, said latex having a pH of 3 to 6 preferably 4 to 5.

## EXAMPLES

### LATEX A

A latex is prepared by polymerizing butadiene to obtain a rubber polymer latex containing 40% solids using 1.2% sodium oleate emulsifier. The polymerization was initiated by a redox system of iron and sodium formaldehyde sulfoxylate. The emulsion was further stabilized by 0.02 pphl (parts per hundred parts of latex) of sodium dodecyl diphenyl ether disulfonate (SDDED). The particle size of the polymer is observed to be 0.12 microns (weight average).

### LATEX B

To 100 parts of Latex A at 22°C. is added, in <1 minute and with stirring, a solution of 0.5 parts acetic anhydride in 30 parts water. The mixture is allowed to stand quiescent for 30 minutes at which time 8 parts of a 10% solution of SDDED is slowly added. The observed particle size is 0.5 microns (weight average). The latex has a pH of about 5.

### LATEX C

Using an apparatus of U.S.P. 4,043,955 Latex A was passed through the apparatus and continuously coagulated at a latex temperature of 22°C. The latex feed rate was 0.25 lbs./hr. (113 g/hr.) and mixed with a feed stream of acetic anhydride such that the latex contained 0.9 part of anhydride per hundred parts of latex. The dwell time in the agglomerating conduit (tube 2" in diameter and 45" long (5 cm x 112.5 cm) was 30 minutes providing an agglomerated rubber particle size of 0.5 microns. The agglomerated latex was stabilized with SDDED (0.80 pphl) as an acid stable emulsifier.

### LATEX D

A latex was prepared by the method of Latex C but the agglomeration was carried out at a temperature of 38°C.

EXAMPLE 1

Latex B is emulsion grafted with styrene and acrylonitrile monomers as follows:

In a glass reaction flash equipped with a mechanical stirrer is added 25 parts of water containing 0.1 grams of ferric nitrate nonanhydrate. 100 parts of Latex B is added, with stirring and the mixture heated to 35°C. Three parts of a 70/30 (by weight) styrene/acrylonitrile mixture is added followed by 0.14 parts of potassium persulfate. Over a period of 2 hours is added 6 parts more of the styrene/acrylonitrile mixture along with 4 parts of a 1% sodium sulfite solution. The reaction temperature rises to 45°C. as the reaction proceeds. The batch is held at 45°C. for 1 hour at which time is filtered through four layers of cheesecloth. No measurable coagulum is obtained. Monomer conversion, by gas chromatographic analysis, is 95% and final latex solids is 30%.

EXAMPLE 2

Latex B is emulsion grafted as follows:

In the same reaction vessel as in Example 1, the latex and water are heated to 80°C. The 70/30 styrene/acrylonitrile mixture is continuously added over 2 hours along with 7 parts of 2% potassium persulfate. The batch is held at 80°C. for 1 hour and then cooled to 40°C. and filtered through 4 layers of cheese cloth. The coagulum is dried and results in 2% of the total batch. Monomer conversion is 95% and latex solids is 30%.

EXAMPLE 3

Latex C is grafted as in Example 1 and the same results are obtained.

EXAMPLE 4

Latex D is grafted as in Example 2. The batch set up at about 75% conversion of the monomers.

EXAMPLE 5

Latex D is grafted as in Example 1. The coagulum obtained was about 6% of the batch weight.

TABLE 1

| Example | Agglomeration Temp. | Agglomeration Method | Grafting Temp. | % Coagulum |
|---|---|---|---|---|
| 1 | Low (22°C.) | Batch | Low (35°C.) | 0 |
| 2 | Low (22°C.) | Batch | High (80°C.) | 2 |
| 3 | Low (22°C.) | Continuous | Low (35°C.) | 0 |
| 4 | High (38°C.) | Continuous | High (80°C.) | Set-up |
| 5 | High (38°C.) | Continuous | Low (35°C.) | 6 |

It is evident from Table 1 that a combination of low temperature agglomeration and low temperature redox grafting provides grafted latices that are essentially free of coagulum.

## CLAIMS

WHAT IS CLAIMED IS:

1. An improved process for preparing stable latices of large grafted diene rubber particles comprising:

A. agglomerating a diene rubber latex having an average rubber particle size of about 0.01 to 0.20 microns to rubber particles having an average particle size of 0.3 to 1.0 microns by treating said rubber latex with a water soluble organic acid anhydride,

B. stabilizing said agglomerated diene rubber particles with an emulsifying agent forming a stable agglomerated diene rubber latex,

C. grafting said agglomerated rubber particles with a monomer formulation comprising, monovinylidene aromatic and ethylenically unsaturated nitrile monomers, the improvement comprising: carrying out step (A) at temperatures of 1 to 25°C. and step (C) under grafting conditions such that the monomer formulation is activated with a redox catalyst system operating at temperatures of 35 to 50°C. providing a grafted agglomerated diene rubber latex essentially free of coagulated rubber particles.

2. A process of Claim 1 wherein said rubber particles have a bimodal particle size distribution wherein about 60 to 90% by weight of the rubber particles are 0.30 to 0.50 microns and 10 to 40% of the particles are 0.60 to 1.0 microns.

3. A process of Claim 1 wherein said redox catalyst system has ion couples selected from the group consisting of $Cu^{+}/S_2O_8^{--}/HSO_3^{-}$, $Fe^{++}/S_2O_8^{--}/HSO_3^{-}$, $Cu^{+}$/t-butyl peracetate/ $HSO_3^{-}$, $Fe^{++}$/t-butyl peracetate/$HSO_3^{-}$, $Cu^{+}$/t-butyl perbenzoate/$HSO_3^{-}$, and $Fe^{++}$/t-butyl perbenzoate/$HSO_3^{-}$ or mixtures thereof.

4. A process of Claim 1 wherein said ethylenically unsaturated nitrile monomer is acrylonitrile and said monovinylidene aromatic monomer is styrene and wherein the weight ratio of styrene to acrylonitrile used in grafting said rubber particles is about 80:20 to 60:40 respectively.

5. A process of Claim 4 wherein the rubber particles are grafted with styrene/acrylonitrile monomers such that the weight ratio of graft styrene/acrylonitrile polymer to rubber is about 10 to 70 parts of polymer per 100 parts of rubber moiety.

6. A process of Claim 1 wherein said diene rubber is selected from the group consisting of polybutadiene and copolymers of butadiene/styrene, butadiene/acrylonitrile, polychloroprene and mixtures thereof.

7. A process of Claim 1 wherein said continuous agglomeration of said diene rubber latex in step (A) is carried out by mixing said latex with an organic acid anhydride, said latex having an emulsifying agent which is a salt of an organic acid with an ionization constant lower than the acid of the anhydride.

8. A process of Claim 7 wherein said acid organic anhydride is selected from the group consisting of acetic acid anhydride, maleic acid anhydride and mixtures thereof.

9. A process of Claim 7 wherein said acid anhydride is used in a molar amount at least equal to one-half the molar amount of said emulsifying agent contained in said latex.

10. A process of Claim 1 wherein said agglomerated diene rubber latex is stabilized in step (B) with an acid-stable emulsifying compound selected from the group consisting of nonionic organic and anionic organic and mixtures thereof in an amount sufficient to render said agglomerated latex stable for graft polymerization in step (C), said latex having a pH of about 3 to 6.

11. A process of Claim 1 wherein said redox system is operating in an aqueous emulsion having a pH of about 3 to 6 stabilized with an acid-stable emulsifying agent present in an amount of about 0.3 to 1.5 parts per 100 parts of latex.

12. A process of Claim 1 wherein step (C) grafting with said monomer formulation is carried out in the presence of a rubber phase having 60 to 90% by weight of rubber particles having a average particle size of 0.02 to 0.2 microns and 10 to 40% by weight of said agglomerated rubber particles having a particle size of about 0.3 to 1.0 microns, said rubber particles, having a particle size of 0.02 to 0.20 microns, being added in step (C) as a latex stabilized with an acid stable emulsifying compound.

13. A process of Claim 10 wherein said acid stable emulsifying compound is selected from the group consisting of sodium dodecyl diphenyl ether disulfonate, ethoxylated actyl phenol, sodium tridecyl ether sulfate.

14. An improved process for preparing stable latices of large grafted diene rubber particles comprising:

A. agglomerating a diene rubber latex having an average rubber particle size of about 0.01 to 0.20 microns to rubber particles having an average particle size of about 0.3 to 1.0 microns by treating said rubber latex with a water soluble organic acid anhydride,

B. stabilizing said agglomerated diene rubber particles with an emulsifying agent forming a stable agglomerated diene rubber latex,

C. grafting said agglomerated rubber particles with a monomer formulation consisting essentially of styrene and acrylonitrile monomers, the improvement comprising: carrying out step (A) at temperatures of 1 to 25°C. and step (C) under grafting conditions such that the monomer formulation is activated with a redox catalyst system operating at temperatures of 35 to 50°C. providing a grafted agglomerated diene rubber latex essentially free of coagulated rubber particles.

15. An improved process for preparing stable latices of large grafted diene rubber particles comprising:

A. agglomerating a diene rubber latex having an average rubber particle size of about 0.01 to 0.20 microns to rubber particles having an average particle size of about 0.3 to 1.0 microns by treating said rubber latex with a water soluble organic acid anhydride,

B. stabilizing said agglomerated diene rubber particles with an emulsifying agent forming a stable agglomerated diene rubber latex,

C. grafting said agglomerated rubber particles with a monomer formulation consisting essentially of styrene and acrylonitrile monomers, the improvement comprising: carrying out step (A) at temperatures of 1 to 25°C. and step (C) under grafting conditions such that the monomer formulation is activated with a redox catalyst system operating at temperatures of 35 to 50°C. providing a grafted agglomerated diene rubber latex essentially free of coagulated rubber particles, wherein the weight ratio of styrene to acrylonitrile monomers used in grafting said rubber particles is about 80:20 to 60:40, said rubber particles being grafted with about 10 to 70 parts of said monomers per 100 parts of rubber moiety.